# EUROPÄISCHE PATENTSCHRIFT

(11) **EP 1 036 973 B1**
(45) Veröffentlichungstag und Bekanntmachung des Hinweises auf die Patenterteilung: **23.10.2002**
(21) Anmeldenummer: 00102483.5
(22) Anmeldetag: 05.02.2000
(51) Int. Cl.: F16L 37/088, E03C 1/04

(54) **Sanitärarmatur**
Sanitary fitting
Armature sanitaire

(30) Priorität: 16.03.1999 DE 19911574
(43) Veröffentlichungstag der Anmeldung: 20.09.2000
(73) Patentinhaber: HANSA METALLWERKE AG, 70567 Stuttgart (DE)
(72) Erfinder: Oberdörfer, Hans, 70567 Stuttgart (DE)
(74) Vertreter: Ostertag, Ulrich, Dr.

(56) Entgegenhaltungen:
- EP-A- 0 681 127
- US-A- 4 645 245
- US-A- 5 685 341

## Beschreibung

Die Erfindung betrifft eine Sanitärarmatur mit
a) einem Armaturengehäuse;
b) einem das Armaturengehäuse nach unten abschließenden Boden, der mindestens eine Durchgangsbohrung aufweist;
c) mindestens einer Wasserzulaufleitung, die in der Durchgangsbohrung des Bodens befestigt ist und hierzu eine mit einer Umfangsnut versehene Steckhülse aufweist, in welcher ein Sprengring eingerastet ist;
   wobei
d) von einer Grenzfläche zwischen einem Teil des Bodens und einem darüberliegenden Armaturenteil aus ein Aufnahmeraum in dem Boden für den Sprengring zugänglich ist, in dem der Sprengring einen solchen Außendurchmesser einnimmt, daß er durch die Bohrung des Bodens nicht wieder herausgezogen werden kann.

Während in früherer Zeit die Wasserzulaufleitungen von Sanitärarmaturen (seien dies nun Wasserzulaufschläuche oder Wasserzulaufrohre) in den Boden der Sanitärarmatur eingelötet wurden, finden in jüngster Zeit zunehmend formschlüssige Befestigungen der Wasserzulaufleitungen Verwendung, wobei die Dichtungsfunktion von O-Ring-Dichtungen übernommen wird. Derartige formschlüssige Befestigungsmethoden sind sehr viel preiswerter und schneller auch von weniger qualifiziertem Personal durchzuführen als die herkömmlichen Lötungen.

Eine Sanitärarmatur, der US 4 645 245 und der US 5 685 341 der eingangs genannten Art ist in der EP 0 681 127 B1 beschrieben. Bei dieser befindet sich der Aufnahmeraum für den Sprengring in einem Formteil, welches über dem Boden der Sanitärarmatur angebracht ist und gemeinsam mit der Steuerkartusche an diesem Boden befestigt ist. Der Sprengring ist so dimensioniert, daß er diesen Aufnahmeraum und die Nut in der Steckhülse der Wasserzulaufleitung vollständig ausfüllt. Bei dieser Konstruktion ist es erforderlich, daß die Wasserzulaufleitungen bereits bei der Montage der Sanitärarmatur von außen her durch den Boden der Sanitärarmatur hindurchgeführt werden, wonach dann auf das in das Innere der Sanitärarmatur überstehende Ende der Steckhülse der Sprengring aufgesetzt wird. Der Aufnahmeraum für den Sprengring wird dann durch das Aufsetzen des Formteiles und die Montage der Steuerkartusche abgeschlossen. Nachteilig hierbei ist, daß die langen Wasserzulaufleitungen bereits werksseitig montiert sind, was einerseits die Montage der Sanitärarmatur vor Ort behindert und andererseits die Verpackungen für die Sanitärarmatur unnötig groß macht.

Aufgabe der vorliegenden Erfindung ist es, eine Sanitärarmatur der eingangs genannten Art derart auszugestalten, daß sie werksseitig ohne Wasserzulaufleitung fertig montiert werden kann und daß die Wasserzulaufleitungen später vor Ort von außen her angebracht werden können.

Diese Aufgabe wird erfindungsgemäß dadurch gelöst, daß
e) der Sprengring und die diesen aufnehmende Nut der Steckhülse dimensionsmäßig so aufeinander abgestimmt sind, daß der Sprengring in der Nut auf einen Durchmesser komprimierbar ist, der dem Durchmesser der Bohrung im Boden entspricht, derart, daß die Steckhülse unter Kompression des Sprengringes von außen her in die Bohrung des Bodens eingeschoben werden kann, bis der Sprengring im Aufnahmeraum wieder auffedert.

Erfindungsgemäß besteht also zwischen der Innenmantelfläche des Sprengringes und dem Grund der Ringnut in der Steckhülse ein gewisses Spiel. Aufgrund dieses Spieles läßt sich der Sprengring so weit in die Nut zurückdrücken und hierdurch seinen Außendurchmesser verringern, bis er durch die Bohrung im Boden der Sanitärarmatur hindurchgeschoben werden kann. Es ist also nicht mehr erforderlich, zunächst die Steckhülse durch die Bohrung hindurchzuführen, um den Sprengring aufsetzen zu können, wie dies bei der oben erwähnten EP 0 681 127 B1 der Fall war.
Die erfindungsgemäße Sanitärarmatur kann bis auf die Wasserzulaufleitungen vollständig montiert ausgeliefert werden, wobei die Wasserzulaufleitungen einfach in die Verpackung beigegeben werden. Die Verpackungsgröße läßt sich auf diese Weise erheblich reduzieren. Die Befestigung der Sanitärarmatur z.B.an einem Waschtisch kann ohne störende Wasserzulaufleitungen erfolgen. Erst wenn die Sanitärarmatur fest montiert ist, erfolgt die Verbindung zur Hausleitung, indem die Wasserzulaufleitungen einerseits an die Hausleitungen angeschlossen und andererseits in den Boden der Sanitärarmatur eingeschoben werden.

Vorteilhafterweise ist der Aufnahmeraum in einer Erweiterung der Bohrung des Bodens ausgebildet und teilweise von einem dort eingesetzten Haltering begrenzt. Aufgrund dieses Halteringes ist es einfach, die Hinterschneidung in der Bohrung des Bodens zu erzielen, die für einen Aufnahmeraum eines Sprengringes erforderlich ist.

Diese Ausführungsform der Erfindung läßt sich vorteilhaft dadurch weitergestalten, daß auf dem Haltering in der Erweiterung der Bohrung des Bodens ein O-Ring angeordnet ist. Dieser O-Ring ist an der angegebenen Stelle zuverlässig plaziert und auch in der zur Erzielung der Dichtfunktion richtigen Weise komprimiert und kann beim nachträglichen Einstecken der Steckhülse der Wasserzulaufleitung nicht mehr verschoben werden.

Vorteilhaft ist weiter, wenn der Aufnahmeraum von einer Grenzfläche zwischen zwei aneinander befestigten Bodenteilen aus zugänglich ist. In diesem Falle beeinflußt - anders als bei der EP 0 681 127 B1 - die Demontage der Steuerkartusche (z.B. zu Wartungszwecken) die Befestigung der Wasserzulaufleitungen nicht.

Ein Ausführungsbeispiel der Erfindung wird nachfolgend anhand der Zeichnung näher erläutert; es zeigen
- Figur 1: eine Explosionsansicht des zweiteiligen Bodens einer Sanitärarmatur sowie eines Wasserzufuhrschlauches mit den zugehörigen Befestigungselementen;
- Figuren 2 bis 4: in Ausschnittvergrößerungen von Figur 1 verschiedene Montageschritte bei der Befestigung des Wasserzufuhrschlauches am Boden.

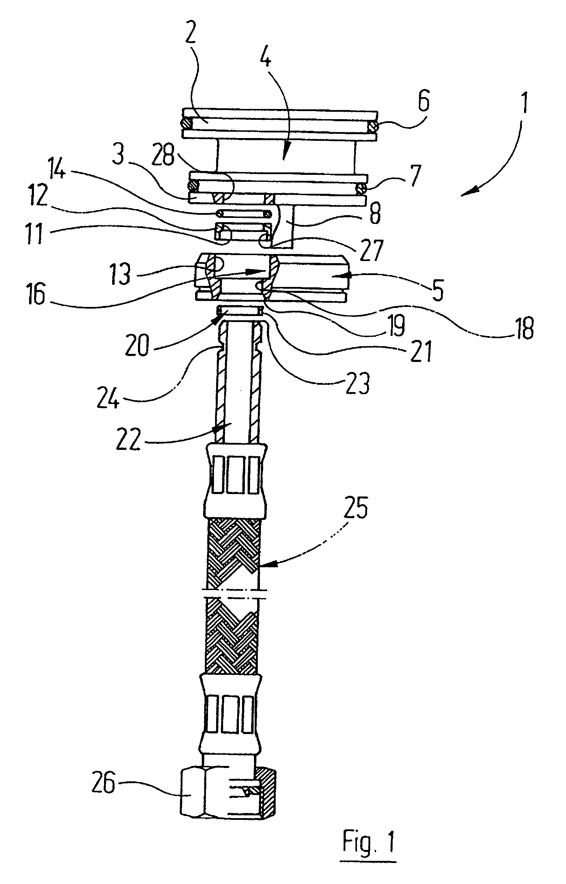

Die Hauptkomponenten der Explosionsansicht von Figur 1 sind ein aus zwei Teilen 4, 5 zusammensetzbarer Boden 1 einer sanitären Mischarmatur, wie dieser an und für sich bekannt ist, sowie ein Wasserzufuhrschlauch 25, der ohne Zuhilfenahme einer Lötung lösbar an dem Boden 1 befestigt werden soll.

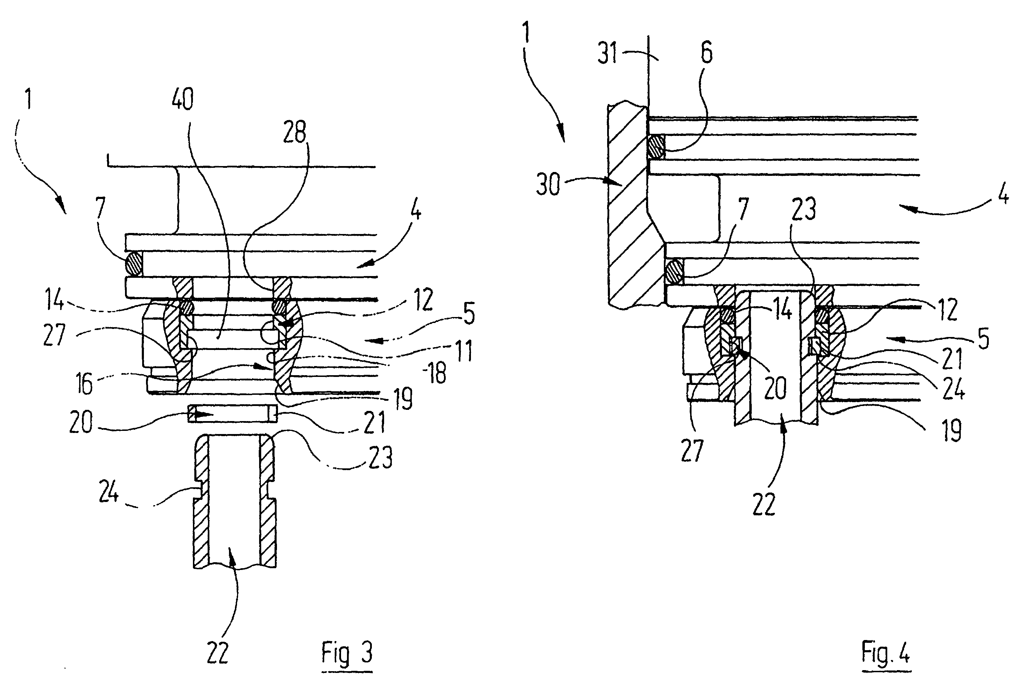

Das obere Bodenteil 4 weist einen oberen flanschartigen Bereich 2 und einen unteren flanschartigen Bereich 3 auf. In jeweils einer Umfangsnut dieser flanschartigen Bereiche 2, 3 liegt eine O-Ring-Dichtung 6 bzw. 7, welche bei der Anbringung des Bodens 1 in dem nur in Figur 4 teilweise dargestellte Armaturengehäuse 30 die Abdichtung gegen dieses übernehmen.

Das obere Bodenteil 4 weist zwei axiale Wasserdurchgangsbohrungen 28 auf, von denen in der Zeichnung nur eine sichtbar ist. Diese Wasserdurchgangsbohrungen 28 erstrecken sich bis zur oberen Stirnfläche des oberen Bodenteiles 4. Dort wird bei der fertig montierten Sanitärarmatur eine Steuerkartusche 31 (Figur 4) so aufgesetzt, daß das über die Bohrung 28 zufließende Wasser in die Steuerkartusche gelangen kann.

Das obere Bodenteil 4 läßt sich an dem unteren Bodenteil 5 mit Hilfe von Rastlaschen 8 befestigen, welche von der Unterseite des oberen Bodenteiles 4 nach unten überstehen und am unteren Bodenteil 5 so einrasten können, daß die Bodenteile 4, 5 unter Bildung des Gesamtbodens 1 aneinander befestigt sind, wie dies in Figur 3 zum Ausdruck gebracht ist.

Auch das untere Bodenteil 5 weist, zu den Durchgangsbohrungen 28 des oberen Bodenteiles 4 fluchtend, zwei Durchgangsbohrungen 16 auf, die einen oberen im Durchmesser erweiterten Bereich 13 und einen unteren im Durchmesser kleineren Bereich 18 besitzt.

Der Wasserzufuhrschlauch 25 ist an seinem dem Boden 1 der Sanitärarmatur zugewandten Ende mit einer starren metallischen Steckhülse 22 versehen, die an ihrem freien Ende mit einer Abschrägung 23 und in einem gewissen Abstand von diesem Ende mit einer Umfangsringnut 24 versehen ist. Am anderen Ende trägt der Wasserzufuhrschlauch 25 eine Verbindungsmutter 26, die in bekannter Weise dem Anschluß des Wasserzufuhrschlauches 25 an der Hausleitung dient.

Zur wasserdichten, lösbaren Steckverbindung der Steckhülse 22 des Wasserzufuhrschlauches 25 werden zusätzlich zu den bereits beschriebenen Hauptkomponenten ein O-Ring 14, ein Haltering 12 sowie ein mit einem Schlitz 21 versehener Sprengring 20 benötigt.

Die Montage der verschiedenen Elemente geschieht in folgender Weise:

Bereits werksseitig wird der Haltering 12 in den im Durchmesser erweiterten Bereich 13 der Durchgangsbohrung 16 des unteren Bodenteiles 5 eingesetzt. Dieser im Durchmesser erweiterte Bereich 13 besitzt eine solche Höhe, daß oberhalb des Halteringes 12 in ihm der O-Ring 14 so weit Platz findet, daß er geringfügig übersteht. Nun wird das obere Bodenteil 4, wie das der Figur 3 zu entnehmen ist, mit Hilfe der Rastlaschen 3 auf das untere Bodenteil 5 aufgesteckt und an diesem befestigt. Der O-Ring 14 wird dabei so weit komprimiert, daß der Übergangsbereich zwischen den Durchgangsbohrungen 16 im unteren Bodenteil 5 und 28 im oberen Bodenteil 4 nach außen abgedichtet ist.

Der untere Bereich 27 der Durchgangsbohrung des Halteringes 12 weist einen etwas größeren Durchmesser auf als der nach unten benachbarte Bereich 18 kleineren Durchmessers der Durchgangsbohrung 16 des unteren Bodenteiles 5. Der obere Bereich 11 dieser Durchgangsbohrung dagegen weist denselben Durchmesser wie der untere Bereich 18 der Durchgangsbohrung 16 und die Durchgangsbohrung 28 im oberen Bodenteil 4 auf. Auf diese Weise entsteht zwischen dem Haltering 12 und der Stufe der Durchgangsbohrung 16 des unteren Bodenteiles 5 ein Aufnahmeraum 40 für den zunächst sich noch außerhalb des Bodens 1 befindlichen Sprengring 20.

Der fertigmontierte Boden 1 wird sodann werksseitig in dem Armaturengehäuse 30 montiert. Der Sprengring 20 wird mit Hilfe seiner Schlitzung 21 aufgeweitet und in die Umfangsnut 24 an der Steckhülse 22 des Wasserzufuhrschlauches 2 eingesetzt.

Außen- und Innendurchmesser des Sprengringes 20 sind dabei folgendermaßen dimensioniert:

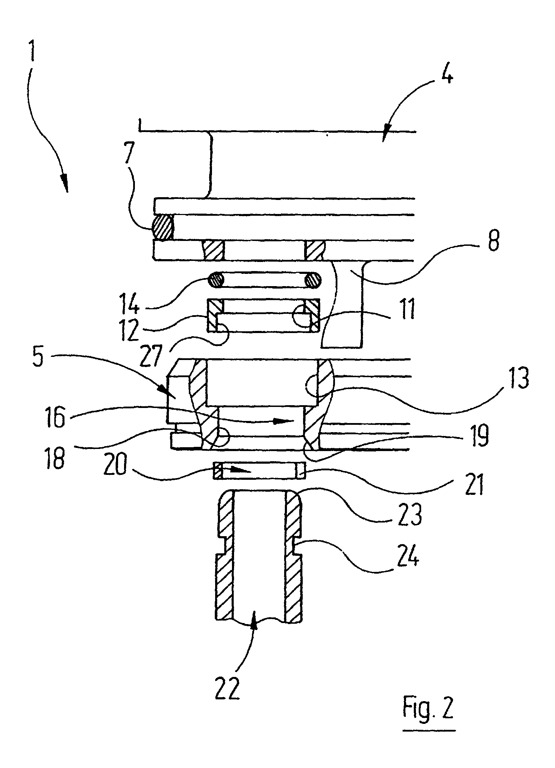

In entspanntem Zustand, wie er in den Figuren 1, 2 und 3 dargestellt ist, weist der Sprengring 20 einen Außendurchmesser auf, der etwa dem Durchmesser des unteren Bereiches 27 der Durchgangsbohrung des Halteringes 12 entspricht; der Innendurchmesser im entspannten Zustand ist kleiner als der Außendurchmesser der Steckhülse 22 des Wasserzufuhrschlauches 25. Die Tiefe der Nut 24 in der Steckhülse 22 ist dabei so groß, daß der Sprengring 20 bis auf einen Außendurchmesser komprimiert werden kann, der gleich dem Durchmesser des unteren Bereiches 18 der Durchgangsbohrung 16 im unteren Bodenteil 5 ist.

Die soweit montierte Sanitärarmatur wird nunmehr zum Versand gebracht.

Vor Ort wird die beschriebene Sanitärarmatur vom Sanitärinstallateur an der gewünschten Stelle, z.B. an einem Waschtisch, befestigt. Zum ihrem Anschluß an die Hausleitung geht er folgendermaßen vor: Die Steckhülse 22 mit dem eingesetzten Sprengring 20 wird von unten her gegen die Durchgangsbohrung 16 des unteren Bodenteiles 5 geführt. Aufgrund einer Abschrägung 19 im Bereich der unteren Mündung dieser Durchgangsbohrung 16 wird der Sprengring 20 innerhalb der Nut 24 der Steckhülse 22 so weit komprimiert, bis er sein Außendurchmesser den Durchmesser des unteren Bereiches 18 der Durchgangsbohrung 16 erreicht hat. Nunmehr läßt sich die Steckhülse 22 mit dem Sprengring 20 durch diesen Bereich 18 der Durchgangsbohrung 16 hindurchschieben, bis der Sprengring 20 in dem Aufnahmeraum 40 angekommen ist. Dort kann er, wie der Figur 4 zu entnehmen ist, auffedern und verriegelt die axiale Bewegung der Steckhülse 22 innerhalb der Durchgangsbohrung 16 des unteren Bodenteiles 5.

Abschließend wird der Wasserzufuhrschlauch 25 mit Hilfe der Überwurfmutter 26 an der Hausleitung angeschlossen. Da sich die Steckhülse 22 nach dem Auffedern im Aufnahmeraum verdrehen kann, braucht der Installateur beim Aufschrauben der Überwurfmutter 26 den Wasserzufuhrschlauch 25 nicht festzuhalten; vielemehr kann eine Verdrehung dieses Wasserzufuhrschlauches 25 zugelassen werden. Die Sanitärarmatur ist nunmehr betriebsbereit.

## Patentansprüche

1. Sanitärarmatur mit
a) einem Armaturengehäuse (30);
b) einem das Armaturengehäuse nach unten abschließenden Boden (1), der mindestens eine Durchgangsbohrung aufweist;
c) mindestens einer Wasserzulaufleitung, die in der Durchgangsbohrung des Bodens befestigt ist und hierzu eine mit einer Umfangsnut (24) versehene Steckhülse (22) aufweist, in welcher ein Sprengring (20) eingerastet ist,
wobei
d) von einer Grenzfläche zwischen einem Teil des Bodens und einem darüberliegenden Armaturenteil aus ein Aufnahmeraum in dem Boden für den Sprengring zugänglich ist, in dem der Sprengring einen solchen Außendurchmesser einnimmt, daß er durch die Bohrung des Bodens nicht wieder herausgezogen werden kann,
**dadurch gekennzeichnet, daß**
e) der Sprengring (20) und die diesen aufweisende Nut (24) der Steckhülse (22) dimensionsmäßig so aufeinander abgestimmt sind, daß der Sprengring (20) in der Nut (24) auf einen Außendurchmesser komprimierbar ist, der dem Durchmesser der Bohrung (16) im Boden (1) entspricht, derart, daß die Steckhülse (22) unter Kompression des Sprengringes (20) von außen her in die Bohrung (16) des Bodens (1) eingeschoben werden kann, bis der Sprengring (20) im Aufnahmeraum (40) wieder auffedert.

2. Sanitärarmatur nach Anspruch 1, **dadurch gekennzeichnet, daß** der Aufnahmeraum (40) in einer Erweiterung (13) der Bohrung (16) des Bodens (1) ausgebildet ist und teilweise von einem dort eingesetzten Haltering (12) begrenzt ist.

3. Sanitärarmatur nach Anspruch 2, **dadurch gekennzeichnet, daß** oberhalb des Halteringes (12) in der Erweiterung (13) der Bohrung (16) des Bodens (1) ein O-Ring (14) angeordnet ist.

4. Sanitärarmatur nach einem der vorhergehenden Ansprüche,
**dadurch gekennzeichnet, daß** der Aufnahmeraum (40) für den Sprengring (20) von einer Grenzfläche zwischen zwei aneinander befestigten Bodenteilen (4, 5) aus zugänglich ist.

## Claims

1. A plumbing fixture with
a) a fixture housing (30) ;
b) a floor (1) having at least one through-bore and downwardly closing the fixture housing;
c) at least one water supply line fixed in the through-bore of the floor and having for this purpose a plug-in bush (22) provided with a circumferential groove (24) in which a spring ring (20) is located by a snap fit,
d) a retaining space for the spring ring in the fixture floor being accessible from a contact face between a part of the floor and a part of the fixture located above said floor, in which retaining space the spring ring fits with an external diameter such that it cannot be withdrawn through the bore in the floor,
**characterised in that**
e) the spring ring (20) and the groove (24) in the plug-in bush (22) retaining said spring ring are dimensionally so adapted to each other that the spring ring (20) is compressible in the groove (24) to an external diameter which corresponds to the diameter of the bore (16) in the floor (1) in such a way that when the spring ring (20) is compressed the plug-in bush (22) can be pushed into the bore (16) of the floor (1) from outside until the spring ring (20) springs back in the retaining space (40).

2. A plumbing fixture according to Claim 1, **characterised in that** the retaining space (40) is formed in a widened portion (13) of the bore (16) in the floor (1) and is partially delimited by a retaining collar (12) inserted in said widened portion.

3. A plumbing fixture according to Claim 2, **characterised in that** an 0-ring (14) is arranged above the retaining collar (12) in the widened portion (13) of the bore (16) in the floor (1).

4. A plumbing fixture according to one of the preceding claims, **characterised in that** the retaining space (40) for the spring ring (20) is accessible from a contact face between two parts (4, 5) of the floor which are fixed together.

## Revendications

1. Robinetterie d'installation sanitaire comprenant :
a) un corps de robinet (30) ;
b) un fond (1) fermant le corps de robinet par le bas, lequel comporte au moins une forure ;
c) au moins un conduit d'admission d'eau, qui est fixé dans la forure réalisée dans le fond et comporte, à cet effet, un manchon enfichable (22) muni d'une gorge périphérique (24), dans laquelle est bloqué un circlip (20) ;
dans lequel
d) un logement, réalisé dans le fond pour le circlip, est accessible à partir d'une surface limite entre une partie du fond et une partie de la robinetterie située au-dessus de celle-ci, dans lequel logement le circlip prend un diamètre extérieur tel qu'il ne peut plus être retiré à travers la forure réalisée dans le fond,
**caractérisée en ce que**
e) les dimensions du circlip (20) et de la gorge (24) du manchon enfichable (22), destinée à le recevoir, sont ajustées de telle sorte que le circlip (20) peut être comprimé dans la gorge (24) jusqu'à un diamètre extérieur qui correspond au diamètre de la forure (16) dans le fond (1), de telle sorte que le manchon enfichable (22), par la compression du circlip (20), peut être enfiché de l'extérieur dans la forure (16) du fond (1) jusqu'à ce que le circlip (20) puisse à nouveau se dilater par un effet ressort dans le logement (40).

2. Robinetterie d'installation sanitaire selon la revendication 1, **caractérisée en ce que** le logement (40) est réalisé dans une zone élargie (13) de la forure (16) du fond (1) et est délimité en partie par une bague de blocage (12) qui y est insérée.

3. Robinetterie d'installation sanitaire selon la revendication 2, **caractérisée en ce qu'**un joint torique (14) est posé au-dessus de la bague de blocage (12) dans la zone élargie (13) de la forure (16) du fond (1).

4. Robinetterie d'installation sanitaire selon une des revendications précédentes, **caractérisée en ce que** le logement (40) est accessible pour le circlip (20) à partir d'une surface limite entre deux parties du fond (4, 5) fixées l'une contre l'autre.
